# EUROPÄISCHE PATENTANMELDUNG

(11) **EP 4 218 401 A1**
(43) Veröffentlichungstag der Anmeldung: **02.08.2023**
(21) Anmeldenummer: 23153508.9
(22) Anmeldetag: 26.01.2023
(51) Int. Cl.: A01G 9/08, B65G 15/14, B65G 17/38, B65G 21/20, B65G 37/00, B66F 9/12

(54) **VORRICHTUNG ZUM AUFNEHMEN UND ABSETZEN VON IN REIHEN STEHENDEN PFLANZTÖPFEN**

(30) Priorität: 01.02.2022 DE 102022102330
(71) Anmelder: seed2soil GmbH & Co. KG, 26215 Wiefelstede (DE)
(72) Erfinder: Pokriefke, Michael, 27798 Hude (DE); Hamann, Malte, 26188 Edewecht (DE); Lücking, Florian, 26689 Godensholt (DE); Pülscher, Dennis, 26188 Edewecht (DE)
(74) Vertreter: Weeg, Thomas

(57) **Zusammenfassung**

Die vorliegende Erfindung bezieht sich auf eine Vorrichtung (2) zum Aufnehmen und Absetzen von in Reihen stehenden Pflanztöpfen (26) mit einer Mehrzahl von parallel nebeneinander angeordneten, sich in einer Erstreckungsrichtung (R) erstreckenden und mit seitlichen Begrenzungen (6) versehenen Aufnahmekanälen (4).

Um die Verstellmöglichkeit der Kanalbreite (24) der Aufnahmekanäle (4) mit einer Verstellvorrichtung (14) zu verbessern, wird vorgeschlagen, dass die seitlichen Begrenzungen (6) seitlich verschieblich und verdrehfest auf einer quer zur Erstreckungsrichtung (R) der Aufnahmekanäle (4) ausgerichteten Verschiebekulisse (16) gelagert sind, die seitlichen Begrenzungen (6) mit einem verstellbaren Koppelgestänge (18) verbunden und von diesem in ihrer jeweiligen Betriebsstellung gehalten sind, das Koppelgestänge (18) die Verstellvorrichtung (14) bildet, und das Koppelgestänge (18) dazu ausgebildet ist, bei dessen Betätigung die Kanalbreite (24) aller Aufnahmekanäle (4) um denselben Wert zu verstellen.

## Beschreibung

Die vorliegende Erfindung bezieht sich auf eine Vorrichtung zum Aufnehmen und Absetzen von in Reihen stehenden Pflanztöpfen mit
- einem Rahmen,
- einer Mehrzahl von parallel nebeneinander angeordneten, sich in einer Erstreckungsrichtung erstreckenden und mit seitlichen Begrenzungen versehenen Aufnahmekanälen, wobei sich die Aufnahmekanäle jeweils von einer Übergabezone bis zu einem Kanalende erstrecken,
- einer Fördervorrichtung, mit der die Pflanztöpfe in der Erstreckungsrichtung des jeweiligen Aufnahmekanals bewegbar sind, und
- einer Verstellvorrichtung zur Verstellung der Kanalbreite der Aufnahmekanäle.

Aus der Schrift EP 2 857 332 Al ist eine gattungsgemäße Vorrichtung bekannt. Die dort offenbarte Verstellvorrichtung ist allerdings kompliziert in der Handhabung. Um die Vorrichtung auf eine neue Topfbreite umzustellen, muss die Kanalbreite jedes einzelnen Aufnahmekanals für sich auf die neue gewünschte Kanalbreite eingestellt werden. Das bedeutet einen hohen Arbeits- und Zeitaufwand. Wenn das nicht genau genug ausgeführt wird, kommt es zu Betriebsstörungen der Vorrichtung.

Weitere Transportvorrichtungen für Topfpflanzen sind aus den Schriften EP 0 395 166 B1 und EP 1 455 566 B1 bekannt. Eine Breitenverstellung der Aufnahmekanäle ist aus diesen Schriften jedoch nicht bekannt.

Es ist die Aufgabe der vorliegenden Erfindung, die Verstellvorrichtung der gattungsgemäßen Vorrichtung zu verbessern. Insbesondere soll die Vorrichtung möglichst einfach an unterschiedliche Größen von Pflanztöpfen anpassbar sein.

Die Aufgabe wird für eine gattungsgemäße Vorrichtung gelöst, indem die seitlichen Begrenzungen seitlich verschieblich und verdrehfest auf einer quer zur Erstreckungsrichtung der Aufnahmekanäle ausgerichteten Verschiebekulisse gelagert sind, die seitlichen Begrenzungen mit einem verstellbaren Koppelgestänge verbunden und von diesem in ihrer jeweiligen Betriebsstellung gehalten sind, das Koppelgestänge die Verstellvorrichtung bildet, und das Koppelgestänge dazu ausgebildet ist, bei dessen Betätigung die Kanalbreite aller Aufnahmekanäle um denselben Wert zu verstellen.

Durch die gleichzeitige Verstellung der seitlichen Begrenzungen über das Koppelgestänge kann die Kanalbreite der Aufnahmekanäle leichter an unterschiedliche Topfgrößen angepasst werden. Es genügt, nur das Koppelgestänge einmalig zu verstellen, um dadurch alle Aufnahmekanäle gleichzeitig auf eine neue Topfgröße einzustellen. Die Verstellung ist weniger zeitaufwendig, und die Verstellung ist weniger fehleranfällig, weil sich bei einer Verstellung des Koppelgestänges die Kanalbreiten aller Aufnahmekanäle um dasselbe Maß verändern. Das Koppelgestänge ist kostengünstig herstellbar, die Handhabung und Bedienung ist einfach, und es fällt kaum ein Wartungsaufwand während der Nutzungsdauer der Vorrichtung an. Das Koppelgestänge kann stufenlos verstellbar ausgeführt sein, so dass es millimetergenau an alle möglichen Topfgrößen anpassbar ist. Die Vorrichtung kann dadurch mit einer hohen Funktionssicherheit effektiver betrieben werden.

Die Aufnahmekanäle im Sinne dieser Erfindung können nach unten offen ausgestaltet sein, so dass die Pflanztöpfe nach unten frei hängend zwischen den seitlichen Begrenzungen gehalten sind, wenn sie sich in den Aufnahmekanälen befinden. Die Vorrichtung kann aber auch im Bereich der Aufnahmekanäle mit einem Boden oder einer sonstigen bodenseitigen Begrenzung wie beispielsweise einer Gleitstange versehen sein, worauf die eingezogenen Pflanztöpfe stehen oder zumindest abgestützt werden können.

Nach einer Ausgestaltung der Erfindung ist das Koppelgestänge mittels eines Linearantriebs verstellbar. Der Linearantrieb verstellt das Koppelgestänge in einer linearen Richtung. Als ein Beispiel für einen Linearantrieb ist ein Hydraulikzylinder zu sehen. Ein Hydraulikzylinder vermag über die Hydraulikflüssigkeit, mit der er bewegt wird, auf vergleichsweise kurzen Hubwegen hohe Stellkräfte aufzubauen. Als Antrieb ist er gleichwohl vergleichsweise leicht und bauraumsparend. Über entsprechende Hydraulikventile ist der Hydraulikzylinder auch präzise steuerbar. Aber auch andere Linearantriebe kommen für die Verstellung des Koppelgestänges in Betracht.

Nach einer Ausgestaltung der Erfindung ist das Koppelgestänge als Scherengitter ausgestaltet. Ein Scherengitter ist eine kostengünstige und mechanisch einfache, aber zuverlässige Lösung, um Stellbewegungen von einem Antriebsmotor auf eine Mehrzahl von seitlichen Begrenzungen zu übertragen, wobei sich alle seitlichen Begrenzungen um dasselbe Maß in die Stellrichtung bewegen.

Nach einer Ausgestaltung der Erfindung ist das Koppelgestänge als ein um eine Drehachse verstellbarer Schwenkbalken ausgestaltet, der über Koppelstangen mit den jeweiligen seitlichen Begrenzungen verbunden ist. Der Schwenkbalken wird verschwenkt, indem eine erste seitliche Begrenzung quer zur Erstreckungsrichtung der Aufnahmekanäle von einem Antrieb verschoben wird. Über eine Koppelstange, die diese erste seitliche Begrenzung mit dem Schwenkbalken verbindet, wird der Schwenkbalken in die jeweilige Bewegungsrichtung mitgenommen und dabei um seine Drehachse verschwenkt. Die Schwenkbewegung des Schwenkbalkens wird wiederum über andere Koppelstangen, die den Schwenkbalken mit den anderen seitlichen Begrenzungen verbinden, in eine Verschiebebewegung der übrigen seitlichen Begrenzungen übersetzt, die sich dann ebenfalls in die Bewegungsrichtung der ersten seitlichen Begrenzung bewegen.

Nach einer Ausgestaltung der Erfindung ist das Koppelgestänge im Bereich der Kanalenden der Aufnahmekanäle angeordnet. Das Koppelgestänge kann aus einer Sicht von der Übergabezone her auf die Kanalenden insbesondere direkt hinter den Kanalenden angeordnet sein, wobei das Koppelgestänge dabei auch in einer Höhenlage oberhalb der Aufnahmekanäle positioniert sein kann. Bei dieser Positionierung des Koppelgestänges wird der Aufnahmeraum der Aufnahmekanäle zwischen den seitlichen Begrenzungen und oberhalb der seitlichen Begrenzungen nicht durch das Koppelgestänge eingeschränkt. So können auch Pflanztöpfe von der Vorrichtung aufgenommen werden, in die hohe Pflanzen eingepflanzt sind.

Nach einer Ausgestaltung der Erfindung ist als Antrieb zur Verstellung der Kanalbreite der Aufnahmekanäle ein Hydraulikzylinder verwendet, der quer zur Erstreckungsrichtung der Aufnahmekanäle in einer zumindest annähernd horizontalen Lage hinter den Kanalenden der Aufnahmekanäle in der Vorrichtung angeordnet ist. Die Anordnung hinter den Kanalenden der Aufnahmekanäle versteht sich aus einer Sicht von der Übergabezone her auf die Kanalenden, wobei der Hydraulikzylinder dabei in einer Höhenlage auf Höhe oder oberhalb der Aufnahmekanäle positioniert sein kann. Bei dieser Einbaulage verbleibt ein ausreichend großer Hubweg, den der Hydraulikzylinder ein- und ausfahren kann, um die Kanalbreite der Aufnahmekanäle an eine gewünschte Kanalbreite anzupassen. Der Hydraulikzylinder ist gleichwohl in einer Lage in die Vorrichtung eingebaut, in der er gut geschützt ist gegen sonst drohende eventuelle Kollisionen mit Hindernissen während des Rangierens und Transportierens von Pflanztöpfen mit der Vorrichtung. In dieser Einbaulage behindert er aber nicht das Beschicken und Entleeren der Aufnahmekanäle mit Pflanztöpfen, er ist keinem besonderen Verschmutzungsrisiko ausgesetzt, und die Person, die die Vorrichtung bedient, hat bei dieser Einbaulage einen ungehinderten Überblick über die Beförderung der Pflanztöpfe.

Nach einer Ausgestaltung der Erfindung ist die Fördervorrichtung mit motorisch angetriebenen Fördermitteln versehen, die zumindest abschnittweise an den jeweiligen seitlichen Begrenzungen entlang der Erstreckungsrichtung des Aufnahmekanals endlos umlaufend und wahlweise in Aufnahmerichtung oder Absetzrichtung betreibbar ausgebildet sind. Endlos umlaufende Fördermittel wie Ketten-, Riemen- oder Bandförderer sind kostengünstig herstellbar, wartungsarm betreibbar und funktionssicher.

Nach einer Ausgestaltung der Erfindung ist die Fördervorrichtung mit einer rotierend angetriebenen Antriebswelle angetrieben, die parallel zu der Verschiebekulisse ausgerichtet ist, auf der die seitlichen Begrenzungen gelagert sind, und die Antriebswelle weist im Bereich der Aufnahmekanäle eine umfangseitige Verzahnung auf, die mit innenverzahnten Hohlrädern kämmt, die zusammen mit den ihnen jeweils zugeordneten seitlichen Begrenzungen entlang der Antriebswelle verlagerbar sind, wobei die Hohlräder die Fördermittel antreiben, die auf der ihnen jeweils zugeordneten seitlichen Begrenzung angeordnet sind. Dieses Antriebskonzept macht es möglich, die seitlichen Begrenzungen querverschieblich in axialer Richtung der Antriebswelle zu verlagern, ohne dadurch den Antrieb der Fördermittel an den seitlichen Begrenzungen auskuppeln zu müssen, wenn die Kanalbreite der Aufnahme verstellt werden soll. Bei einer entsprechenden Ausführung der Vorrichtung sind die seitlichen Begrenzungen sowohl an der Antriebswelle als auch an der Verschiebekulisse entlang querverschieblich. Bei dieser Ausgestaltung sind die seitlichen Begrenzungen an zwei Positionen gehalten, wodurch diese unabhängig von ihrer Kanalbreiteneinstellung immer einer gewünschten räumlichen Ausrichtung gehalten sind. Die Hohlräder gleiten bei einer Verstellung der Kanalbreite entlang der umfangseitigen Verzahnung in Achsrichtung der Antriebswelle, ohne dabei außer Eingriff zu geraten mit der umfangseitigen Verzahnung der Antriebswelle.

Nach einer Ausgestaltung der Erfindung sind die seitlichen Begrenzungen unter Beibehaltung einer mit dem Koppelgestänge eingestellten Kanalbreite der Aufnahmekanäle entlang der Verschiebekulisse querverschieblich zur Breite des Rahmens beweglich gelagert. Sind die Aufnahmekanäle auf eine Kanalbreite eingestellt, die kleiner ist als die maximal mögliche Kanalbreite, ist der Rahmen der Vorrichtung breiter als die eingestellte Kanalbreite der Aufnahmekanäle. Wegen des breiteren Rahmens ist es dann aber möglicherweise nicht mehr möglich, auch noch die äußerste Reihe der Pflanztöpfe mit der Vorrichtung aufzunehmen, weil sonst der Rahmen mit einer Seitenwand oder einem Dachpfosten oder mit Reihen von anderen neben der äußersten aufzunehmenden Pflanzentopfreihe aufgestellten Pflanzentopfreihen kollidiert, die die Aufstellfläche der aufzunehmenden Pflanztöpfe seitlich begrenzen. Entsprechendes gilt beim Absetzen von Pflanzentöpfen. Um hier gleichwohl auch die äußersten Pflanztopfreihen mit der Vorrichtung erfassen oder am äußersten Rand der vorgesehenen Aufstellfläche absetzen zu können, ist vorgesehen, die Aufnahmekanäle insgesamt in Querrichtung zur Breite des Rahmens verlagern zu können, so dass der äußerste Aufnahmekanal auch bei einer schmaler eingestellten Kanalbreite der Aufnahmekanäle mit seiner Arbeitsbreite bis an den äußeren Rand des Rahmens heranreicht oder sogar darüber übersteht.

Nach einer Ausgestaltung der Erfindung ist als Antrieb zur querverschieblichen Bewegung der seitlichen Begrenzungen ein Hydraulikzylinder verwendet, der quer zur Erstreckungsrichtung der Aufnahmekanäle in einer zumindest annähernd horizontalen Lage hinter den Kanalenden der Aufnahmekanäle in der Vorrichtung angeordnet ist. Für die Vorteile dieser Anordnung gelten die vorstehenden Ausführungen zur Kanalbreitenverstellung der Aufnahmekanäle mit einem horizontal hinter dem Kanalende angeordneten Hydraulikzylinder entsprechend.

Nach einer Ausgestaltung der Erfindung sind die Fördermittel als um die seitlichen Begrenzungen auf der Ober- und Unterseite umlaufende Ketten ausgebildet, und die Ketten weisen auf ihren von der jeweiligen seitlichen Begrenzung abgewandten Seite eine Auflagefläche auf, die dazu bestimmt ist, Pflanztöpfen während ihrer Aufnahme in der Vorrichtung mit ihrem Kragen als Auflager zu dienen. Um Pflanztöpfe mit der Vorrichtung aufzunehmen, werden die seitlichen Begrenzungen und damit die Aufnahmekanäle auf einen Abstand zueinander eingestellt, bei dem die aufzunehmenden Pflanztöpfe mit einem an ihnen ausgebildeten Kragen auf den Auflageflächen aufliegen. Werden die Ketten dann entlang des Aufnahmekanals bewegt, bewegen sich die auf dem oberseitigen Trum der Ketten aufliegenden und damit darin eingehängten Pflanztöpfe mit den Ketten mit. Die Auflageflächen können durch U-förmig geformte Bleche gebildet werden, die über die zugehörigen Kettenglieder gestülpt und dauerhaft mit diesen verbunden sind. Auf der Oberseite können die Auflageflächen eine reibwerterhöhende oder -vermindernde Beschichtung aufweisen, damit die Pflanztöpfe nicht so leicht verrutschen, wenn sie ein- oder ausgefördert oder mit der Vorrichtung transportiert werden, bzw. leichter auf den Auflageflächen rutschen, wenn die Töpfe in Absetzrichtung über einen Anschlag ausgerichtet werden sollen.

Nach einer Ausgestaltung der Erfindung sind seitliche Begrenzungen auf ihrer Unterseite mit einer Gleitkufe versehen. Die Gleitkufe kann bei mehreren oder allen seitlichen Begrenzungen vorhanden sein. Durch die Gleitkufe wird verhindert, dass die Fördermittel und/oder die seitlichen Begrenzungen mit dem Boden kollidieren können. In Pflanzenzuchtbetrieben sind die Böden häufig mit Wurzelschutzfolien oder Vliesen belegt, die leicht beschädigt werden können, wenn sich darin etwas verhakt. Über die Gleitkufe werden die Fördermittel und/oder die jeweilige seitliche Begrenzung in einem ausreichenden Abstand zum Boden gehalten, so dass die Bauteile der Vorrichtung nicht mit dem Boden, den Wurzelschutzfolien oder Vliesen in Berührung kommen können. Außerdem wird durch die Gleitkufe das Risiko vermindert, dass das Fördermittel Schmutz und Fremdkörper vom Boden aufnehmen könnte, die zu einem erhöhten Verschleiß und Fehlfunktionen führen könnten.

Nach einer Ausgestaltung der Erfindung kann die Gleitkufe mittels eines Schnellwechselsystems werkzeuglos gewechselt werden. Durch den vereinfachten Wechsel der Gleitkufen können verschlissene Gleitkufen leicht und schnell ausgetauscht werden. Außerdem können unterschiedliche Gleitkufen schnell gegeneinander austauscht werden, die für unterschiedliche Bodenmaterialien unterschiedlich gut geeignet sind.

Nach einer Ausgestaltung der Erfindung weist die Gleitkufe eine Höhenverstelleinrichtung auf. Durch die Höhenverstelleinrichtung können die jeweiligen Fördervorrichtungen mit ihren seitlichen Begrenzungen besser an Höhenmaße der jeweils aufzunehmenden oder abzusetzenden Pflanztöpfe angepasst werden. Die Höhenverstelleinrichtung kann mechanisch in einer Höhenlage feststellbar sein, beispielsweise durch einen Splint oder einen Schraubbolzen, die Höhenverstelleinrichtung kann über einen Kraftspeicher in einer Höhenlage gehalten sein, beispielsweise mittels einer mechanischen Feder, die über die Höheneinstellung der Vorrichtung eingedrückt wird, oder es ist eine motorische Verstellvorrichtung vorhanden, mit der die Gleitkufe in eine gewünschte Höhenlage eingestellt und dort gehalten werden kann.

Nach einer Ausgestaltung der Erfindung ist die Höhenverstelleinrichtung mittels eines Stellglieds an die Kanalbreiteneinstellung gekoppelt. Da Pflanztöpfe mit einem größeren Durchmesser üblicherweise auch höher sind als Pflanztöpfe mit einem kleineren Durchmesser, ist es über das Stellglied möglich, die Höhenverstelleinrichtung auf einen größeren Abstand zum Boden einzustellen, wenn die Aufnahmekanäle mit der Kanalbreiteneinstellung auf eine größere Kanalbreite eingestellt werden, und umgekehrt das Höhenmaß, auf das die Höhenverstelleinrichtung eingestellt ist, zu verringern, wenn die Kanalbreiten auf kleiner Pflanztöpfe eingestellt werden. Die Bedienung und Handhabung wird dadurch für den Benutzer vereinfacht. Es sind allenfalls noch geringe Nachjustierungen erforderlich, wenn zu befördernde Pflanztöpfe ein eher ungewöhnliches Höhen-/Breitenverhältnis in ihren Maßen haben.

Nach einer Ausgestaltung der Erfindung wird jeder Aufnahmekanal durch einen Anschlag am Kanalende begrenzt. Durch den Anschlag ist sichergestellt, dass die Aufnahmekanäle gleich lange Erstreckungslängen haben. Durch einen Anschlag wird auch vermieden, dass der hinterste in einen Aufnahmekanal aufgenommene Pflanztopf gegen den Rahmen der Vorrichtung gedrückt werden, wobei es zu Beschädigungen der in den Pflanztöpfen befindlichen Pflanzen kommen könnte. Vielmehr stoppt der Anschlag den Pflanztopf vorher. Der Bediener der Vorrichtung wird dadurch in der Bedienung der Maschine entlastet.

Nach einer Ausgestaltung der Erfindung ist ein Anschlag eines Aufnahmekanals gegenüber den Anschlägen in benachbarten Aufnahmekanälen in Erstreckungsrichtung versetzt angeordnet. Durch die zueinander verschobene Anordnung der Anschläge können die Pflanztöpfe versetzt zueinander in den jeweiligen Aufnahmekanälen gehalten sein. Beim späteren Absetzen der Pflanztöpfe in einem Gewächshaus ist die versetzte Anordnung der Pflanztöpfe zueinander in den Aufnahmekanälen wichtig, da die Pflanztöpfe dann auch beim späteren Ausfördern aus den Aufnahmekanälen versetzt zueinander abgegeben werden. Bei einem versetzten Aufstellen der einzelnen Pflanztöpfe in benachbarten Reihen wird die die Grundfläche des Gewächshauses optimal ausgenutzt, und die Pflanzen haben jeweils für sich rundum ausreichend Platz, um sich gut zu entfalten.

Nach einer Ausgestaltung der Erfindung ist der Anschlag mittels eines Stellglieds an die Kanalbreiteneinstellung gekoppelt. Die Anpassung der Position des Anschlags in Längsrichtung des zugehörigen Aufnahmekanals an die eingestellte Aufnahmebreite des Aufnahmekanals ist aus denselben Gründen vorteilhaft wie die Anpassung der Höhenlage der Höhenverstelleinrichtung. Bei unterschiedlich großen Durchmessern der Pflanztöpfe ergeben sich auch unterschiedliche Positionen der Anschläge, bei denen die Vorrichtung eine optimal große Menge an Pflanztöpfen, insbesondere auch in einer zueinander versetzten Anordnung, aufnimmt. Bleibt das Verhältnis der Höhen- und Durchmessermaße der Pflanztöpfe bei unterschiedlichen Topfgrößen in einem zumindest annähernd gleichen Verhältnis zueinander, sind keine Nachjustierungen der Positionen der Anschläge erforderlich, wenn die Position der Anschläge bei einer Breitenverstellung der Aufnahmekanäle über ein entsprechendes Stellglied selbsttätig mit verstellt wird.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Vorrichtung aus einer Ansicht von vorne,
- Fig. 2:: eine vergrößerte Ansicht eines um eine seitliche Begrenzung umlaufenden Fördermittels,
- Fig. 3:: eine Detailansicht eines Kanalendes,
- Fig. 4:: die in Fig. 1 gezeigte Vorrichtung aus einer Ansicht von hinten,
- Fig. 5:: die Vorrichtung mit eng eingestellten Kanalbreiten, wobei die seitlichen Begrenzungen am Rahmen nach links verschoben sind,
- Fig. 6:: die Vorrichtung mit eng eingestellten Kanalbreiten, wobei die seitlichen Begrenzungen am Rahmen nach rechts verschoben sind, und
- Fig. 7:: die Vorrichtung beim Absetzen oder Aufnehmen von Pflanztöpfen.

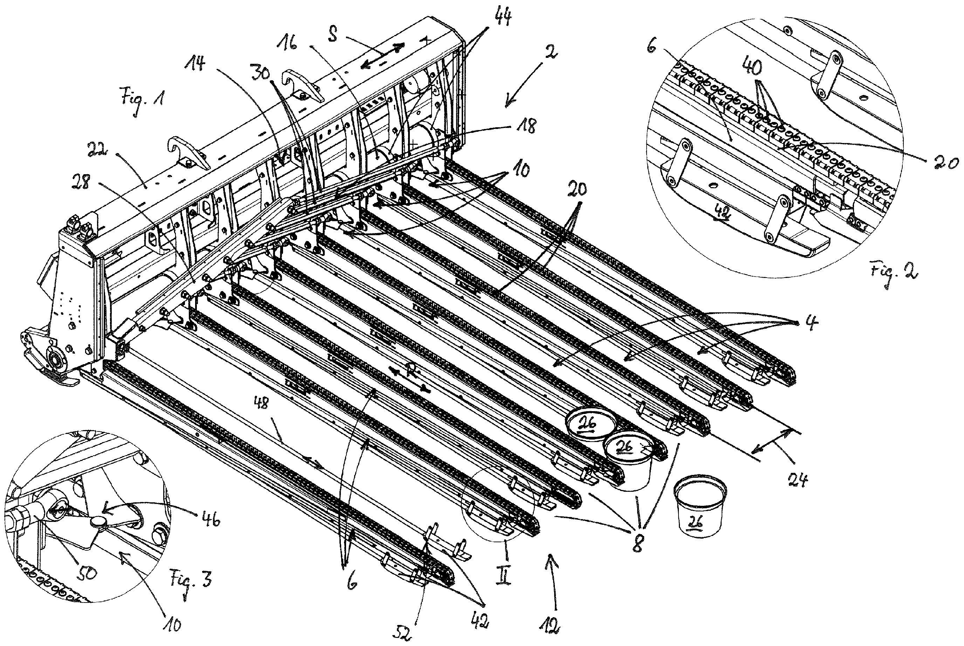

In Fig. 1 ist eine Vorrichtung 2 aus einer Ansicht von schräg vorne gezeigt. Die als Ausführungsbeispiel gezeigte Vorrichtung 2 verfügt über insgesamt acht Aufnahmekanäle 4, die an einem Rahmen 22 gehalten sind und die sich jeweils von einer im vorderen Bereich der Vorrichtung 2 befindlichen Übergabezone 8 bis zu einem Kanalende 10 in Erstreckungsrichtung R erstrecken. Jeder Aufnahmekanal 4 verfügt über zwei seitliche Begrenzungen 6, die die jeweilige Kanalbreite 24 eines Aufnahmekanals 4 bestimmen.

In der Übergabezone 8 werden die Pflanztöpfe 26 in die Aufnahmekanäle 4 eingezogen oder wieder abgegeben. Die seitlichen Begrenzungen 6 sind auf ihrer Unterseite jeweils mit einer Gleitkufe 42 versehen. Um Pflanztöpfe 26 aufzunehmen, wird die an ein nicht dargestelltes Trägerfahrzeug angebaute Vorrichtung 2 in einen stehenden Bestand von Pflanztöpfen 26 hineingefahren, wobei dabei die Pflanztöpfe 26 von der Vorrichtung 2 aufgenommen und mit einer angetriebenen Fördervorrichtung 12 in die Aufnahmekanäle 4 nach hinten hineinbefördert werden. Die Pflanztöpfe 26 können dann mit der Vorrichtung 2 herumgefahren werden, um die Pflanztöpfe 26 zu einem anderen Aufstellort zu verbringen.

Um Pflanztöpfe 26 in die Vorrichtung 2 einziehen und wieder ausfördern zu können, ist die Vorrichtung 2 mit einer Fördervorrichtung 12 ausgestattet. Die Fördervorrichtung 12 verfügt über Fördermittel 20, die im Ausführungsbeispiel als um die seitlichen Begrenzungen 6 auf der Ober- und Unterseite umlaufende Ketten ausgebildet sind. Die Ketten weisen auf ihren von der jeweiligen seitlichen Begrenzung 6 abgewandten Seite mit den einzelnen Kettegliedern verbundene Auflageflächen 40 auf, die in Fig. 2 als eine Vergrößerung des Teilausschnitts II in Fig. 1 dargestellt sind und die dazu bestimmt sind, Pflanztöpfen 26 während ihrer Aufnahme in der Vorrichtung 2 mit ihrem Kragen als Auflager zu dienen. Die Fördergeschwindigkeit der Fördervorrichtung 12 ist bevorzugt auf die Fahrgeschwindigkeit, mit der die Vorrichtung beim Aufnehmen und Absetzen der Pflanztöpfe 26 bewegt wird, abgestimmt, um möglichst gleichmäßige Reihen aufzunehmen und abzusetzen.

In einem Pflanzenaufzuchtbetrieb verwendete Pflanztöpfe 26 haben nicht immer denselben Durchmesser. Damit die Aufnahmekanäle 4 auf unterschiedliche Kanalbreiten 24 eingestellt werden können, um Pflanztöpfe 26 mit unterschiedlichen Durchmessern aufnehmen und befördern zu können, sind die seitlichen Begrenzungen 6 seitlich verschieblich und verdrehfest auf einer quer zur Erstreckungsrichtung R der Aufnahmekanäle 4 ausgerichteten Verschiebekulisse 16 gelagert. Im Ausführungsbeispiel besteht die Verschiebekulisse 16 aus einem Rohr, das sich quer über die Breite des Rahmens 22 erstreckt. Jede seitliche Begrenzung 6 ist über eine Rohrmuffe 44 mit der Verschiebekulisse 16 verbunden, die die Verschiebekulisse 16 spielfrei oder nahezu spielfrei, aber in Erstreckungsrichtung S der Verschiebekulisse 16 verschiebbar umgreift.

Die seitlichen Begrenzungen 6 sind mit einem verstellbaren Koppelgestänge 18 verbunden und von diesem in ihrer jeweiligen Betriebsstellung gehalten. Das Koppelgestänge 18 bildet einen Teil der Verstellvorrichtung 14. Das Koppelgestänge 18 ist dazu ausgebildet, bei dessen Betätigung die Kanalbreite 24 aller Aufnahmekanäle 4 um denselben Wert zu verstellen. Dazu ist das Koppelgestänge 18 im Ausführungsbeispiel mittels eines Linearantriebs verstellbar. Das Koppelgestänge 18 ist im Bereich der Kanalenden 10 der Aufnahmekanäle 4 angeordnet. Wie in Fig. 3 gezeigt ist, können die Aufnahmekanäle 4 an den Kanalenden 10 mit jeweils einem Anschlag 46 versehen sein, gegen den der jeweils hinterste in einem Aufnahmekanal 4 befindliche Pflanzentopf 26 gefördert wird.

In gezeigten Ausführungsbeispiel sind die Gleitkufen 42 über schwenkbewegliche Verbindungslaschen beweglich mit den seitlichen Begrenzungen 6 verbunden. In Fig. 1 ist die zweite seitliche Begrenzung 6 von links in der Darstellung nicht gezeigt, um einen Blick auf das an der Unterseite der seitlichen Begrenzung befindliche Stellglied 48 zu ermöglichen. Wenn das Stellglied 48 in Erstreckungsrichtung R, wie durch den Doppelpfeil angedeutet, bewegt wird, verändert sich die Höhenlage der zugehörigen Gleitkufe 42. Das Stellglied 48 ist mit dem Koppelgestänge 18 antriebsverbunden, so dass bei einer Verstellung der Kanalbreite 24 über das Koppelgestänge auch die Abstützhöhe der Gleitkufe 42 verändert wird. Die schwenkbeweglichen Verbindungslaschen und das an das Koppelgestänge 18 angebundene Stellglied 48 bilden zusammen eine Höhenverstelleinrichtung 52. Das Stellglied 50 verbindet jeweils einen Anschlag 46 mit einer Verbindungsstange 30 des Koppelgestänges 18, so dass auch die Anschläge 46 bei einer Verstellung des Koppelgestänges 18 verstellt werden.

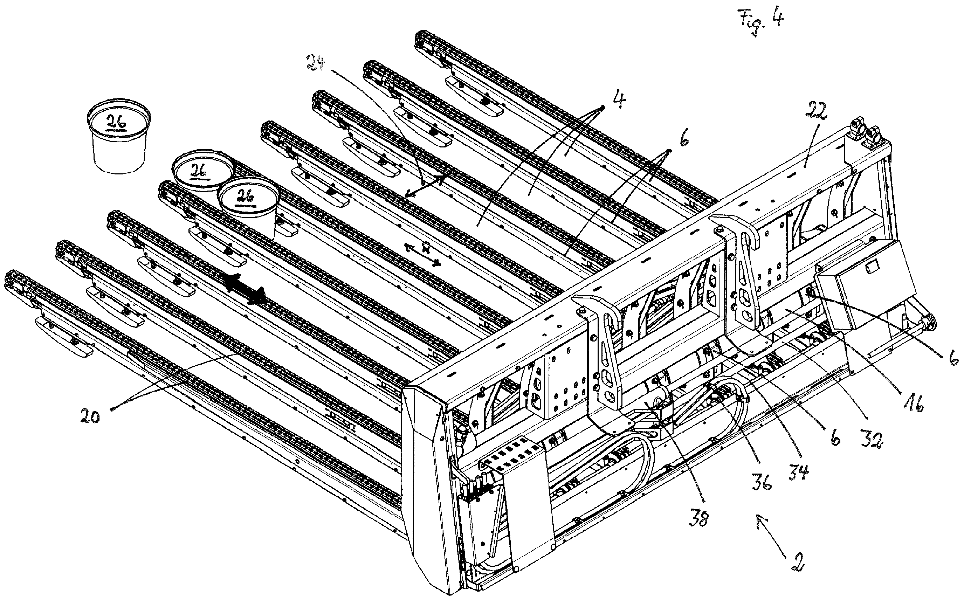

Als Antrieb zur Verstellung der Kanalbreite 24 der Aufnahmekanäle 4 ist ein Hydraulikzylinder 32 verwendet, der quer zur Erstreckungsrichtung R der Aufnahmekanäle 4 in einer zumindest annähernd horizontalen Lage hinter den Kanalenden 10 der Aufnahmekanäle 4 in der Vorrichtung 2 angeordnet ist, wie es in der Fig. 4 zu sehen ist.

Im Ausführungsbeispiel ist der Hydraulikzylinder 32 an einem ersten Ende am Rahmen 22 abgestützt. Das gegenüberliegende Ende des Hydraulikzylinders 32 ist mit dem hinteren Ende einer seitlichen Begrenzung 6 verbunden. Wenn der Hydraulikzylinder 32 ein- und ausgefahren wird, bewegt er dabei die mit ihm verbundene seitliche Begrenzung 6 entlang der Verschiebekulisse 16. Da die mit dem Hydraulikzylinder 32 verbundene seitliche Begrenzung 6 mit dem Koppelgestänge 18 verbunden ist, wird die Verschiebebewegung der vom Hydraulikzylinder 32 bewegten seitlichen Begrenzung 6 über das Koppelgestänge 18 auf die übrigen seitlichen Begrenzungen 6 entsprechend der Geometrie des Schwenkbalkens 28 und der damit drehbeweglich verbundenen Verbindungsstangen 30 übertragen.

Im Ausführungsbeispiel ist für die Übertragung der Verschiebebewegung der vom Hydraulikzylinder 32 bewegten seitlichen Begrenzung 6 auf die übrigen seitlichen Begrenzungen 6 ein Schwenkbalken 28 vorhanden, der über Verbindungsstangen 30 mit allen querverschieblichen seitlichen Begrenzungen 6 verbunden ist. Wenn sich die vom Hydraulikzylinder 32 bewegte seitliche Begrenzung 6 auf der Verschiebekulisse 16 verlagert, wird diese Verlagerungsbewegung über die Verbindungstange 30 von dieser seitlichen Begrenzung 6 zunächst auf den Schwenkbalken 28 übertragen, der mit dieser seitlichen Begrenzung 6 über ein Drehgelenk verbunden ist. Mit der Schwenkbewegung des Schwenkbalkens 28 bewegen sich aber auch alle anderen über ein Drehgelenk mit dem Schwenkbalken 28 verbundenen Verbindungstangen 30 und zwangsläufig auch die damit jeweils verbundenen seitlichen Begrenzungen 6, die ihrerseits wieder über ein Drehgelenk mit der jeweils zugehörigen Verbindungsstange 30 verbunden sind. Auf diese Weise wird die angetriebene Bewegung einer einzigen seitlichen Begrenzung 6 mit dem Koppelgestänge 18 auf alle übrigen seitlichen Begrenzungen 6 übertragen. Anstelle des im Ausführungsbeispiel gezeigten Koppelgestänges 18 mit einem Schwenkbalken 28 und damit druck- und zugsteif verbundenen Verbindungstangen 30 kann als Koppelgestänge 18 auch ein Scherengitter entsprechend verwendet werden, wobei dann jeder Kreuzung der Gitterstangen eine seitliche Begrenzung 6 zugeordnet ist.

Zur Bewegung der Pflanztöpfe 26 in den Aufnahmekanälen 4 ist die Fördervorrichtung 12 mit motorisch angetriebenen Fördermitteln 20 versehen, die zumindest abschnittweise an den jeweiligen seitlichen Begrenzungen 6 entlang der Erstreckungsrichtung R des Aufnahmekanals 4 endlos umlaufend und wie durch den dicken Blockpfeil in Fig. 4 angedeutet wahlweise in Aufnahmerichtung oder Absetzrichtung betreibbar ausgebildet sind. Im Ausführungsbeispiel ist die Fördervorrichtung 12 mit einer rotierend angetriebenen Antriebswelle 34 angetrieben, die parallel zu der Verschiebekulisse 16 ausgerichtet ist, auf der die seitlichen Begrenzungen 6 gelagert sind. Die Antriebswelle 34 weist im Bereich jeder seitlichen Begrenzung 6 eine umfangseitige Verzahnung oder ein drehfest mit der Antriebswelle 34 verbundenes Zahnrad auf, die oder das mit einem innenverzahnten Hohlrad 36 kämmt, das zusammen mit den ihnen jeweils zugeordneten seitlichen Begrenzungen 6 entlang der umfangseitigen Verzahnung der Antriebswelle 34 verlagerbar ist. Die Hohlräder 36 treiben die Fördermittel 20 an, die auf der ihnen jeweils zugeordneten seitlichen Begrenzung 6 angeordnet sind.

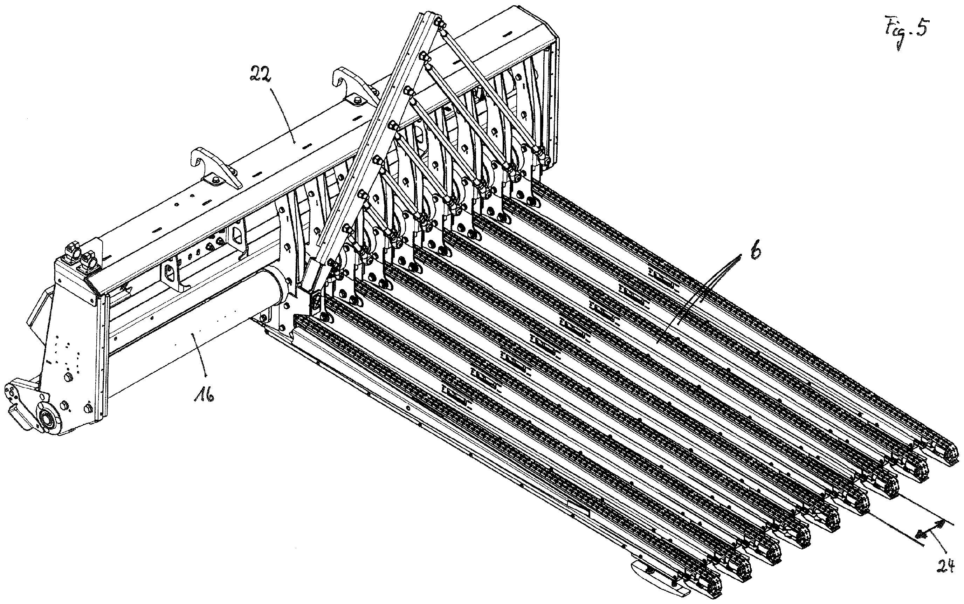

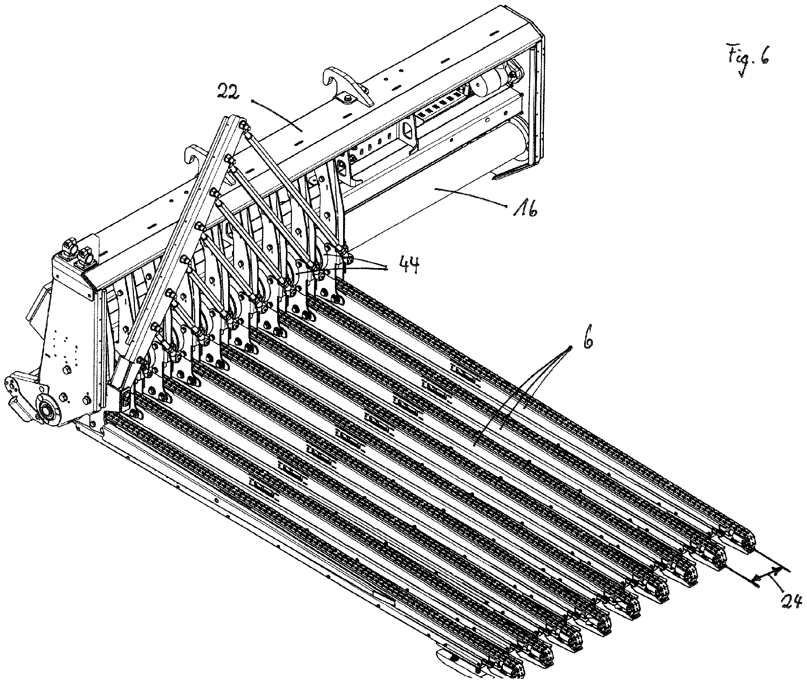

Die seitlichen Begrenzungen 6 sind unter Beibehaltung einer mit dem Koppelgestänge 18 eingestellten Kanalbreite 24 der Aufnahmekanäle 4 entlang der Verschiebekulisse 16 querverschieblich zur Breite des Rahmens 22 beweglich gelagert. Als Antrieb zur querverschieblichen Bewegung der seitlichen Begrenzungen 6 ist ein Hydraulikzylinder 38 verwendet, der quer zur Erstreckungsrichtung R der Aufnahmekanäle 4 in einer zumindest annähernd horizontalen Lage hinter den Kanalenden 10 der Aufnahmekanäle 4 in der Vorrichtung 2 angeordnet ist. Wenn der Hydraulikzylinder 38 ein- und ausgefahren wird, bewegt er das gesamte Paket der seitlichen Begrenzungen 6 mit dem Koppelgestänge 18 und dessen Antrieb entlang der Verschiebekulisse 16 in die entsprechende Bewegungsrichtung. Die Fig. 5 zeigt das Paket der seitlichen Begrenzungen 6 mit einer sehr eng eingestellten Kanalbreite 24, bei der die Summe der Aufnahmekanäle 4 erheblich schmaler ist als die Breite des Rahmens 22. Um gleichwohl bei der Vorfahrt der Vorrichtung 2 in eine Aufstellung von Pflanztöpfen 26 auch Pflanztöpfe 26 aufnehmen zu können, die am in Fahrtrichtung gesehen linken Rand vor der Vorrichtung 2 stehen, ist das Paket der seitlichen Begrenzungen 6 mit dem Hydraulikzylinder 38 außermittig an den linken Rand des Rahmens 22 verschoben worden. In Fig. 6 ist eine Einstellung der Vorrichtung gezeigt, bei der das Paket der seitlichen Begrenzungen 6 bei einer ähnlich engen Einstellung der Kanalbreite 24 an den rechten Rand des Rahmens 22 verschoben worden ist. Bei der Querverschiebung des Pakets der seitlichen Begrenzungen 6 entlang der Verschiebekulisse 16 durch die Betätigung des Hydraulikzylinders 38 bleibt die Einstellung der Kanalbreite 24 der Aufnahmekanäle 4 unverändert, solange nicht der Hydraulikzylinder 32 betätigt wird, mit dem das Koppelgestänge 18 verstellt werden kann. Der Hydraulikzylinder 32 wird zusammen mit dem Paket der seitlichen Begrenzungen 6 vom Hydraulikzylinder 38 in seiner jeweiligen aktuellen Einstellung entlang der Verschiebekulisse 16 bewegt.

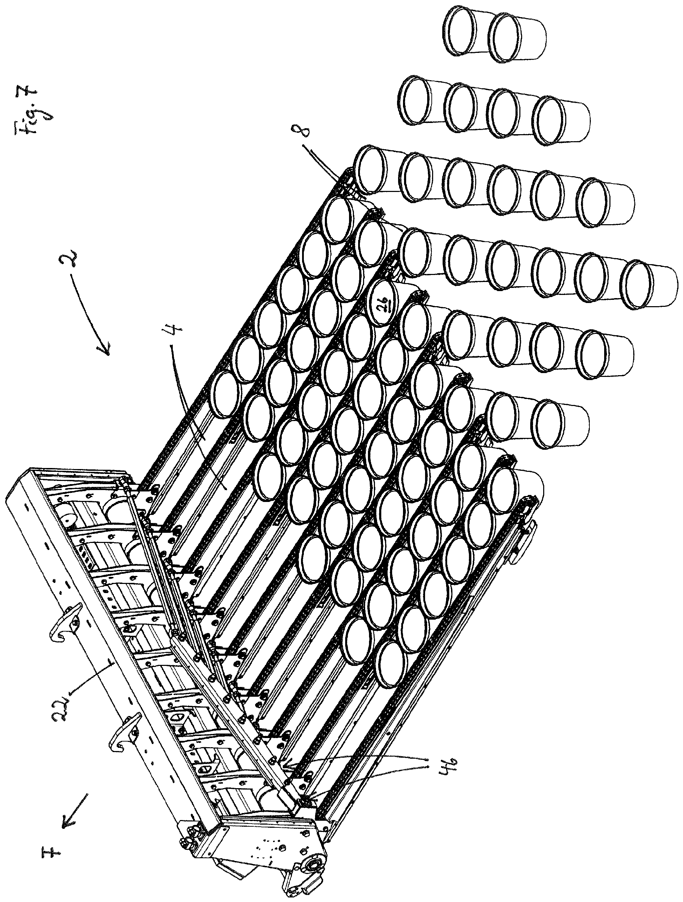

Die Fig. 7 zeigt die Vorrichtung 2 beim Absetzen der Pflanztöpfe 26 auf dem Boden. Beim Absetzen der Pflanztöpfe 26 wird die Vorrichtung 2 in die Richtung F bewegt. Dabei sind die Fördermittel 20 in eine Richtung entgegengesetzt zur Richtung F angetrieben, so dass in jedem Aufnahmekanal 4 der jeweils vorderste Pflanztopf 26 im Bereich der Übergabezone 8 auf dem Boden abgesetzt wird. Wenn die Bewegungsgeschwindigkeiten der Vorrichtung 2 in Richtung F und der Fördermittel 20 entgegen der Richtung F gleich sind, würden die Pflanztöpfe 26 mit den Abständen aus den Aufnahmekanälen 4 abgefördert, mit denen sie in den Aufnahmekanälen 4 gehalten sind. Ist die Bewegungsgeschwindigkeit der Vorrichtung 2 in Richtung F schneller als die Bewegungsgeschwindigkeit der Fördermittel 20 entgegen der Richtung F, ergeben sich Abstände der auf dem Boden abgesetzten Pflanztöpfe 26 zueinander, die größer sind als die Abstände, die die Pflanztöpfe 26 zueinander hatten, als sie in den Aufnahmekanälen 4 gehalten waren, wie in Fig. 7 gezeigt. Indem die Anschläge 46 eines Aufnahmekanals 4 gegenüber den Anschlägen 46 in benachbarten Aufnahmekanälen 4 in Erstreckungsrichtung R versetzt zueinander angeordnet sind, können die Pflanztöpfe 26 auch in Längsrichtung versetzt zueinander auf dem Boden abgesetzt werden, wodurch sich ein gleichförmiges Raster ergibt, in dem die Pflanztöpfe 26 auf dem Boden abgesetzt werden, in dem die in den Pflanztöpfen 26 befindlichen Pflanzen optimale Abstände zueinander haben. Wenn Pflanztöpfe 26 in die Aufnahmekanäle 4 aufgenommen werden sollen, wird die Vorrichtung 2 entgegen der Richtung F auf die auf dem Boden stehenden Pflanztöpfe 26 zu bewegt, und die Fördermittel 20 werden in die Richtung F umlaufend angetrieben.

Die Erfindung ist nicht auf die vorstehenden Ausführungsbeispiele beschränkt. Dem Fachmann bereitet es keine Schwierigkeiten, die Ausführungsbeispiele auf eine ihm geeignet erscheinende Weise abzuwandeln, um sie an einen konkreten Anwendungsfall anzupassen.

### Bezugszeichenliste

- 2: Vorrichtung
- 4: Aufnahmekanal
- 6: seitliche Begrenzung
- 8: Übergabezone
- 10: Kanalende
- 12: Fördervorrichtung
- 14: Verstellvorrichtung
- 16: Verschiebekulisse
- 18: Koppelgestänge
- 20: Fördermittel
- 22: Rahmen
- 24: Kanalbreite
- 26: Pflanztopf
- 28: Schwenkbalken
- 30: Verbindungsstange
- 32: Hydraulikzylinder
- 34: Antriebswelle
- 36: Hohlrad
- 38: Hydraulikzylinder
- 40: Auflagefläche
- 42: Gleitkufe
- 44: Rohrmuffe
- 46: Anschlag
- 48: Stellglied Gleitkufe
- 50: Stellglied Anschlag
- 52: Höhenverstelleinrichtung
- R: Erstreckungsrichtung Aufnahmekanal
- S: Erstreckungsrichtung Verschiebekulisse
- F: Richtung

## Patentansprüche

1. Vorrichtung (2) zum Aufnehmen und Absetzen von in Reihen stehenden Pflanztöpfen (26) mit
- einem Rahmen (22),
- einer Mehrzahl von parallel nebeneinander angeordneten, sich in einer Erstreckungsrichtung (R) erstreckenden und mit seitlichen Begrenzungen (6) versehenen Aufnahmekanälen (4), wobei sich die Aufnahmekanäle (4) jeweils von einer Übergabezone (8) bis zu einem Kanalende (10) erstrecken,
- einer Fördervorrichtung (12), mit der die Pflanztöpfe (26) in der Erstreckungsrichtung (R) des jeweiligen Aufnahmekanals (4) bewegbar sind, und
- einer Verstellvorrichtung (14) zur Verstellung der Kanalbreite (24) der Aufnahmekanäle (4),
**dadurch gekennzeichnet, dass** die seitlichen Begrenzungen (6) seitlich verschieblich und verdrehfest auf einer quer zur Erstreckungsrichtung (R) der Aufnahmekanäle (4) ausgerichteten Verschiebekulisse (16) gelagert sind, die seitlichen Begrenzungen (6) mit einem verstellbaren Koppelgestänge (18) verbunden und von diesem in ihrer jeweiligen Betriebsstellung gehalten sind, das Koppelgestänge (18) die Verstellvorrichtung (14) bildet, und das Koppelgestänge (18) dazu ausgebildet ist, bei dessen Betätigung die Kanalbreite (24) aller Aufnahmekanäle (4) um denselben Wert zu verstellen.

2. Vorrichtung (2) nach Anspruch 1, **dadurch gekennzeichnet, dass** das Koppelgestänge (18) mittels eines Linearantriebs verstellbar ist.

3. Vorrichtung (2) nach Anspruch 1 oder 2, **dadurch gekennzeichnet, dass** das Koppelgestänge (18) als Scherengitter ausgestaltet ist.

4. Vorrichtung (2) nach einem der vorhergehenden Ansprüche 1 oder 2, **dadurch gekennzeichnet, dass** das Koppelgestänge (18) als ein um eine Drehachse verstellbarer Schwenkbalken (28) ausgestaltet ist, der über Verbindungsstangen (30) mit den jeweiligen seitlichen Begrenzungen (6) verbunden ist.

5. Vorrichtung (2) nach einem der vorhergehenden Ansprüche, **dadurch gekennzeichnet, dass** das Koppelgestänge (18) im Bereich der Kanalenden (10) der Aufnahmekanäle (4) angeordnet ist.

6. Vorrichtung (2) nach einem der vorhergehenden Ansprüche, **dadurch gekennzeichnet, dass** als Antrieb zur Verstellung der Kanalbreite (24) der Aufnahmekanäle (4) ein Hydraulikzylinder (32) verwendet ist, der quer zur Erstreckungsrichtung (R) der Aufnahmekanäle (4) in einer zumindest annähernd horizontalen Lage hinter den Kanalenden (10) der Aufnahmekanäle (4) in der Vorrichtung (2) angeordnet ist.

7. Vorrichtung (2) nach einem der vorhergehenden Ansprüche, **dadurch gekennzeichnet, dass** die Fördervorrichtung (12) mit motorisch angetriebenen Fördermitteln (20) versehen ist, die zumindest abschnittweise an den jeweiligen seitlichen Begrenzungen (6) entlang der Erstreckungsrichtung (R) des Aufnahmekanals (4) endlos umlaufend und wahlweise in Aufnahmerichtung oder Absetzrichtung betreibbar ausgebildet sind.

8. Vorrichtung (2) nach einem der vorhergehenden Ansprüche, **dadurch gekennzeichnet, dass** die Fördervorrichtung (12) mit einer rotierend angetriebenen Antriebswelle (34) angetrieben ist, die parallel zu der Verschiebekulisse (16) ausgerichtet ist, auf der die seitlichen Begrenzungen (6) gelagert sind, und die Antriebswelle (34) im Bereich jeder seitlichen Begrenzung (6) eine umfangseitige Verzahnung aufweist, die mit einem innenverzahnten Hohlrad (36) kämmt, das zusammen mit den ihnen jeweils zugeordneten seitlichen Begrenzungen (6) entlang der umfangseitigen Verzahnung der Antriebswelle (34) verlagerbar ist, wobei die Hohlräder (36) die Fördermittel (20) antreiben, die auf der ihnen jeweils zugeordneten seitlichen Begrenzung (6) angeordnet sind.

9. Vorrichtung (2) nach einem der vorhergehenden Ansprüche, **dadurch gekennzeichnet, dass** die seitlichen Begrenzungen (6) unter Beibehaltung einer mit dem Koppelgestänge (18) eingestellten Kanalbreite (24) der Aufnahmekanäle (4) entlang der Verschiebekulisse (16) querverschieblich zur Breite des Rahmens (22) beweglich gelagert sind.

10. Vorrichtung (2) nach Anspruch 8, **dadurch gekennzeichnet, dass** als Antrieb zur querverschieblichen Bewegung der seitlichen Begrenzungen (6) ein Hydraulikzylinder (38) verwendet ist, der quer zur Erstreckungsrichtung (R) der Aufnahmekanäle (4) in einer zumindest annähernd horizontalen Lage hinter den Kanalenden (10) der Aufnahmekanäle (4) in der Vorrichtung (2) angeordnet ist.

11. Vorrichtung (2) nach einem der vorhergehenden Ansprüche, **dadurch gekennzeichnet, dass** die Fördermittel (20) als um die seitlichen Begrenzungen (6) auf der Ober- und Unterseite umlaufende Ketten ausgebildet sind, und die Ketten auf ihren von der jeweiligen seitlichen Begrenzung (6) abgewandten Seite eine Auflagefläche (40) aufweisen, die dazu bestimmt ist, Pflanztöpfen (26) während ihrer Aufnahme in der Vorrichtung (2) mit ihrem Kragen als Auflager zu dienen.

12. Vorrichtung (2) nach einem der vorhergehenden Ansprüche, **dadurch gekennzeichnet, dass** seitliche Begrenzungen (6) auf ihrer Unterseite mit einer Gleitkufe (42) versehen sind.

13. Vorrichtung (2) nach Anspruch 12, **dadurch gekennzeichnet, dass** die Gleitkufe (42) mittels eines Schnellwechselsystems werkzeuglos gewechselt werden kann.

14. Vorrichtung (2) nach Anspruch 12, **dadurch gekennzeichnet, dass** die Gleitkufe (42) eine Höhenverstelleinrichtung (52) aufweist.

15. Vorrichtung (2) nach Anspruch 14, **dadurch gekennzeichnet, dass** die Höhenverstelleinrichtung (52) mittels eines Stellglieds (46) an die Kanalbreiteneinstellung gekoppelt ist.

16. Vorrichtung (2) nach einem der vorhergehenden Ansprüche, **dadurch gekennzeichnet, dass** jeder Aufnahmekanal (4) durch einen Anschlag (46) am Kanalende (10) begrenzt wird.

17. Vorrichtung (2) nach Anspruch 16, **dadurch gekennzeichnet, dass** ein Anschlag (46) eines Aufnahmekanals (4) gegenüber den Anschlägen (46) in benachbarten Aufnahmekanälen (4) in Erstreckungsrichtung (R) versetzt angeordnet ist.

18. Vorrichtung (2) nach Anspruch 17, **dadurch gekennzeichnet, dass** der Anschlag (46) mittels eines Stellglieds (50) an die Kanalbreiteneinstellung gekoppelt ist.
